# EUROPÄISCHE PATENTSCHRIFT

(11) **EP 2 536 550 B1**
(45) Veröffentlichungstag und Bekanntmachung des Hinweises auf die Patenterteilung: **28.10.2015**
(21) Anmeldenummer: 11704443.8
(22) Anmeldetag: 17.02.2011
(51) Int. Cl.: B23K 33/00, B60R 19/48, B29C 65/08, B29C 65/48

(54) **ANPASSUNG UND INDIVIDUALISIERUNG DER OBERFLÄCHENKONTUR ZU VERBINDENDER KÖRPER, SPEZIELL BEIM TORSIONALEN ULTRASCHALLSCHWEISSEN**
ADAPTATION AND CUSTOMIZATION OF THE SURFACE CONTOUR OF BODIES TO BE CONNECTED, IN PARTICULAR DURING TORSIONAL ULTRASONIC WELDING
ADAPTATION ET INDIVIDUALISATION DU CONTOUR DE SURFACE DE CORPS À RELIER, NOTAMMENT LORS DE SOUDURES TORSIONNELLES PAR ULTRASONS

(30) Priorität: 18.02.2010 DE 102010008501
(43) Veröffentlichungstag der Anmeldung: 26.12.2012
(73) Patentinhaber: Faurecia Exteriors GmbH, 91781 Weissenburg (DE)
(72) Erfinder: BÜCKER, Dirk, 41199 Mönchengladbach (DE); GÖRSE, Hergen, 91154 Roth (DE)
(74) Vertreter: Tischner, Oliver
(86) Internationale Anmeldenummer: PCT/EP2011/052359
(87) Internationale Veröffentlichungsnummer: WO 2011/101412

(56) Entgegenhaltungen:
- WO-A1-2011/003891
- DE-A1- 19 758 075
- DE-U1- 29 900 980
- FR-A1- 2 950 943
- US-A1- 2006 163 214

## Beschreibung

Die Erfindung betrifft ein Verfahren zum Fügen von mindestens zwei Anbauteilen mit einem einzigen Bauteil an verschiedenen Fügeorten des Bauteils, insbesondere für ein Kraftfahrzeug, wobei jedes der Anbauteile eine Fügefläche aufweist, die an die Oberfläche des Bauteils am Fügeort angepasst wird, wobei sich die Anbauteile ausschließlich durch verschiedenartige Fügeflächen voneinander unterscheiden und ansonsten identisch ausgebildet werden.

Eine etablierte Technik zum Verbinden bzw. Fügen von Bauteilen aus Kunststoff ist das Schweißen. Hierzu werden diverse Möglichkeiten zur Energieeinbringung genutzt. Diese Techniken sind zum Beispiel Reibschweißen oder Ultraschallschweißen.

Bei beiden Techniken werden durch die eingebrachte Hitze die Bauteile in der Trennebene am Fügeort aufgeschmolzen und verbinden sich dadurch innig.

Das Ausmaß der eingebrachten Wärmeenergie in das oberflächenveredelte lackierte automobile Außenteil hat sich hierbei als entscheidend für die Oberflächenqualität, gerade im Grenzbereich dünner polyolefiner Werkstoffe erwiesen. Eine zu große Wärmeeinbringung führt zu Nachschwindungseffekten in der Außenhaut, in deren Folge es zu sichtbaren Einfallstellen kommt. Diese sichtbaren Einfallstellen entstehen besonders dort, wo sie am meisten stören, nämlich auf der der Schweißstelle abgewandten Oberfläche des Bauteils. Im Falle eines Stoßfängers werden auf der Rückseite Anbauteile angeschweißt, wie zum Beispiel vier Sensorhalter. Durch das Schweißen entstehen leicht sichtbare Einfallstellen auf der gegenüberliegenden lackierten Außenhaut des Stoßfängers.

Zur Minimierung des Energieeintrags haben sich zwei Techniken etabliert:
1.) Verklebung des Bauteils mittels eines zusätzlichen Stoffes der in die Trennebene eingebracht wird. Dieses Verfahren ist vergleichsweise teuer und bei hohen Stückzahlen nicht wirtschaftlich.
2.) Die Technik des torsionalen Ultraschallschweißens (siehe z.B. WO 2011/003891 A1) Aufgrund der erheblich niedrigeren Energieeinbringung in das lackierte Außenteil ist mit ihrer Hilfe eine abzeichnungsfreie Verbindung möglich.

### Kritik am Stand der Technik:

Bei geringem Energieeintrag ist es nicht möglich, die Kontaktflächen der zu verbindenden Bauteile während des Verbindungsprozesses anzugleichen. Infolgedessen ist es bei Freiformoberflächen nötig, jeweils die Trennebene bzw. die Fügeflächen der beiden Körper exakt aufeinander abzustimmen. Zu jedem Verbindungsort gehört ein exakt auf die Oberfläche abgestimmtes Anbauteil bzw. Verbindungskörper. Auch wenn mehrere Verbindungskörper dieselbe Funktion haben, zum Beispiel vier Sensorhalter eines Stoßfängers, diverse Zentrier- oder Haltepinne, müssen diese an sich gleichen Anbauteile in unterschiedlichen Kunststoffformen erzeugt und in individuellen Masseströmen in den Verbindungsprozess eingebracht werden. Dies verteuert den Prozess und führt zu hohen Investitionen.

Das Kleben bietet hier noch die Möglichkeit einer frühen Vereinzelung dergestalt entgegenzuwirken, das ein sich ändernder Abstand zwischen zwei Fügeflächen durch mehr oder weniger starke Kleberaupendicke auszugleichen ist. Bei niedrigenergetischen Schweißverfahren hingegen, zum Beispiel beim torsionalen Ultraschallschweißen, ist es nur möglich, die Trennebene bildende Fläche des anzuschweißenden Körpers so weit runterzuschweißen bis er auf der gesamten Fläche des Grundkörpers anliegt. Dies führt aber zu einem erhöhten Energieeintrag und damit wieder zu einer Gefahr von Abzeichnungen im Grenzbereich dünner lackierter Außenbauteile. Der Vorteil des Ultraschallschweißen ist verspielt.

Die Erfindung macht sich zur Aufgabe, die Individualisierung der Oberflächenkontur des zu verbindenden Körpers in den Verbindungsprozess bzw. Fügeprozess zu integrieren.

Erfindungsgemäß wird diese Aufgabe dadurch gelöst,
a) dass ein für alle Anbauteile verwendbarer Grundkörper hergestellt wird und alle Grundkörper eine Bearbeitungsfläche aufweisen, die durch Konturanpassung in die erforderlichen Fügeflächen überführbar sind und
b) unmittelbar vor dem Fügen diese Konturanpassung der Bearbeitungsfläche an den Grundkörpern vorgenommen wird und dadurch die zu verbindenden Anbauteile mit den erforderlichen Fügeflächen geschaffen werden und
c) unmittelbar anschließend die Anbauteile mit ihren Fügeflächen auf die Fügeorte der Bauteile aufgesetzt und gefügt werden.

Es ist dann nur noch ein Grundkörper für alle Anbauteile nötig. Im Falle benötigter exakter Abstände der Fügeflächen zur Oberfläche der Bauteile am Fügeort, z.B. bei einer Sensoraufnahme, sind Haltertiefen und Ausrichtungen zur Oberfläche individuell einstellbar. Bisherige langwierige Änderungsschleifen der Spritzgusswerkzeuge zur Herstellung der Anbauteile entfallen.

In einer vorteilhaften Ausgestaltung der Erfindung ist das Anbauteil als ein Verbindungsteil ausgebildet an dem andere Teile befestigbar sind.

In einer vorteilhaften Ausgestaltung der Erfindung werden die Grundkörper von einem Roboter gegriffen und einer Bearbeitungsstation zugeführt. In der Bearbeitungsstation wird die Bearbeitungsfläche durch Konturanpassung in die erforderliche Fügefläche überführt und anschließend entnimmt der Roboter die dann fertigen Anbauteile der Bearbeitungsstation und setzt die Anbauteile mit ihren Fügeflächen auf die Fügeorte der Bauteile auf. Anschließend wird das Bauteil mit dem Anbauteil gefügt. Individuelle Konturanpassungen werden durch eine einfache Nachstellung des Roboterbewegungsablaufs und/oder der Bearbeitung in der Bearbeitungsstation bei der vorgeschalteten Konturanpassung ersetzt.

Die Konturanpassung der Bearbeitungsflächen erfolgt bevorzugt durch Umformung oder Materialabtrag.

Vorteilhaft wird das Fügen durch Schweißen oder Kleben durchgeführt.

Zum Schweißen wird bevorzugt das torsionale Ultraschallschweißen verwendet, da hierdurch der Energieeintrag in das Bauteil gering ist.

In einer bevorzugten Ausgestaltung erstreckt sich beim torsionalen Ultraschallschweißen die Konturanpassung nur auf Teile der Bearbeitungsfläche, zum Beispiel auf die zum Bauteil gewandte Oberfläche einer Abstandsrippe.

Zum Kleben werden bevorzugt bei der Konturanpassung vor dem Kleben die Fügeflächen mit Abstandsrippen versehen, deren zum Bauteil gewandte Oberflächen mit der Oberfläche des Bauteils am Fügeort verklebt werden.

Alternativ werden bei der Konturanpassung vor dem Kleben die Fügeflächen so mit Abstandsrippen versehen, dass eine für das verwendete Klebesystem benötigte Fugenbreite geschaffen ist.

Bevorzugt wird das erfindungsgemäße Verfahrens für Bauteile und Anbauteile aus Kunststoff im Automotivbereich verwendet.

Besonders vorteilhaft ist die Verwendung bei Bauteilen und Anbauteilen des Exterieurs im Automotivbereich bevorzugt im Bereich unterhalb lackierter Außenflächen.

Die Bauteile sind bevorzugt Stoßfänger und die Anbauteile zum Beispiel Sensorhalter als Anbauteile.

Das Anbauteil kann zum Beispiel ein Verbindungsteil, zum Beispiel ein Zentrierpin sein, der durch einen Roboter gegriffen und vor dem eigentlichen Verbindungsprozess (Fügeprozess) in seiner Kontur derart verändert wird, dass seine Grundfläche der Oberfläche des Bauteils am Fügeort angepasst wird.

Das erfindungsgemäße Verfahren beschreibt somit den Prozessablauf des Verbindungsprozesses durch im Wesentlichen folgende Schritte.
a.) Aufnahme des zu verbindenden Grundkörpers
b.) Konturanpassung der Fügefläche des Grundkörpers an die Oberflächenform der späteren Form der Fügefläche des Verbindungspartners.
c.) Fügeprozess der beiden Verbindungspartner mit der für die jeweilige Verbindungsart benötigten Parallelität der Freiformoberflächen.

In einer bevorzugten Ausführungsform für eine Klebeverbindung erfolgt die Konturanpassung auch dergestalt, dass die angepasste Kontur aus einer Ebene für die Klebefläche und einer durch Abstandsrippen aufgespannten Ebene gebildet wird, die eine für das verwendete Klebesystem benötigte Fugenbreite garantiert.

Bei der torsionalen Ultraschallverschweißung kann sich auch die angepasste Kontur nur auf Teile der Grundkörperfläche erstrecken, zum Beispiel auf eine Schweißrippe.

Die Konturanpassung kann auch mittels Umformung, z.B. Warmumformung erfolgen.

Die Konturanpassung erfolgt bevorzugt mittels Materialabtrag, z.B. mechanischer Bearbeitung mittels Fräsen, Schleifen, etc.

Nachfolgend wird die Erfindung anhand von vier Figuren näher erläutert.

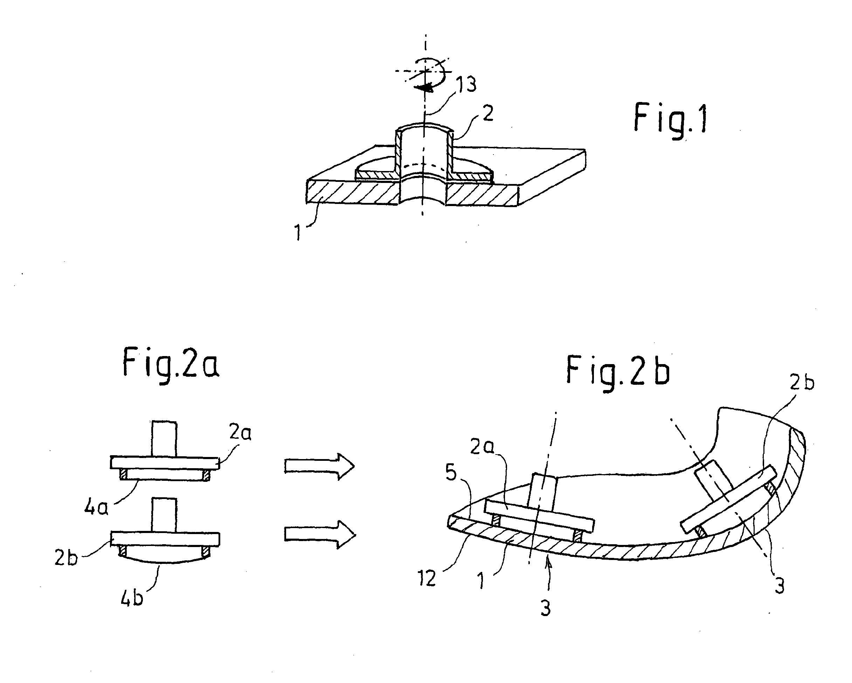

Figur 1 zeigt das bekannte torsionale Ultraschallschweißverfahren, wie es zum Beispiel in der EP 1 930 148 A1 beschrieben ist. Unter torsional wird eine Schwingung einer Sonotrode um ihre Längsachse oder Torsionsachse 13 verstanden, das heißt, die Sonotrode führt eine torsionale Bewegung um eine Torsionsachse aus, welche im Wesentlichen senkrecht auf der Ebene der zu bildenden Schweißnaht steht. Die Torsionsachse liegt somit im Wesentlichen parallel zur Kraftachse, mit welcher die Sonotrode auf das Anbauteil 2 gedrückt wird.

Beim torsionalen Ultraschallschweißverfahren wird eine Sonotrode zur Übertragung der den Schweißvorgang erzeugenden Schwingungen auf die Schweißstelle aufgesetzt, wodurch die Trennebene zwischen Anbauteil 2 und Bauteil 1 schmilzt und das Anbauteil 2 mit dem Bauteil 1 verschweißt.

Figur 2 zeigt das Vorgehen nach dem Stand der Technik. Das Bauteil 1 ist hier ein Stoßfänger der mit zwei Anbauteilen 2a, 2b, hier zwei Sensorhalter, verschweißt, d. h. gefügt werden soll. Die Fügeorte 3 am Bauteil 1 sind jedoch verschieden mal eben, mal gebogen oder eckig. Die Fügefläche 4, d. h. die zum Bauteil 1 gewandte Fläche der Anbauteile 2a, 2b muss an die Oberfläche 5 des Bauteils 1 am Fügeort 3 angepasst sein, um eine stabile Verbindung zu erreichen. Daher werden die Anbauteile 2 in Bezug auf ihre Fügefläche 4 individuell hergestellt. Dies erfordert individuelle Kunststoffformen und eine spezielle Lagerhaltung, um die Teile nicht zu verwechseln. Beim Schweißvorgang werden dann die individuellen Verbindungskörper 2a, 2b auf ihren individuellen Fügeort 3 aufgesetzt und verschweißt, zum Beispiel mit dem torsionalen Ultraschallschweißverfahren.

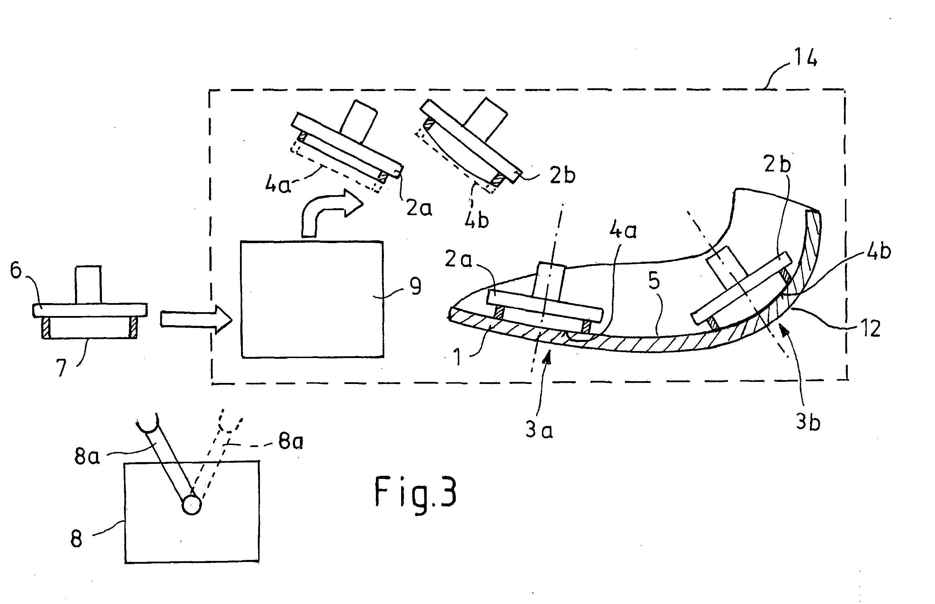

Figur 3 zeigt das erfindungsgemäße Verfahren. Hier werden für alle Anbauteile 2a, 2b verwendbare Grundkörper 6 hergestellt, wobei alle Grundkörper 6 eine Bearbeitungsfläche 7 aufweisen, die durch Konturanpassung in die erforderlichen Fügeflächen 4a, 4b überführt werden. Alle Anbauteile 2a, 2b sind identisch ausgeführt, wodurch die Herstellung wesentlich vereinfacht ist. Es wird nur eine einzige Spritzform verwendet, die Lagerhaltung ist vereinfacht und eine Verwechslung ist ausgeschlossen.

Erfindungsgemäß erfolgt die Konturanpassung, d.h. die Ausgestaltung der Fügeflächen 4a, 4b erst nach der Herstellung der Grundkörper 6 und unmittelbar vor dem Fügen. Nach der Konturanpassung werden dann die fertig bearbeiteten Grundkörper 6, die dann die Anbauteile 2a, 2b darstellen, mit ihren jeweiligen individualisierten Fügeflächen 4a, 4b mit dem Bauteil 1 an den individuellen Fügeorten 3a, 3b verschweißt oder geklebt.

Diese Konturanpassung erfolgt bevorzugt durch Fräsen oder Warmumformen.

Wie in Figur 3 gezeigt, geschieht das Handling bevorzugt mit einem Roboter 8. Der Roboter 8 wird so programmiert, dass er die Grundkörper 2 greift und in eine Bearbeitungsstation 9 einlegt oder an eine Bearbeitungsstation 9 hält. In der Bearbeitungsstation 9 erfolgt die individuelle Konturanpassung der Bearbeitungsfläche 7 zur Schaffung der Fügefläche 4. Nach dem dies geschehen ist, führt der Roboter 8 das dann geschaffene Anbauteil 2 mit seiner jetzt individualisierten Fügefläche 4 aus der Bearbeitungsstation 9 heraus und setzt es auf die Oberfläche 5 des Bauteils 1 am Fügeort 3. Anschließend wird beim torsionalen Ultraschallschweißverfahren die Sonotrode auf das Anbauteil 2 gefahren und das Anbauteil mit dem Bauteil 1 verschweißt. Der Roboter 8 ist in Figur 3 nur als Blackbox gezeichnet. Mit 8a ist der Arm des Roboters 8 angedeutet, der den Grundkörper 6 und später das Anbauteil 2 greift und positioniert. Der eigentliche Verbindungsprozess ist im gestrichelten Rechteck 14 dargestellt. Mit dem Bezugszeichen 12 ist die lackierte Oberfläche des Bauteils 1 gekennzeichnet. Diese darf keine Fehlstellen enthalten.

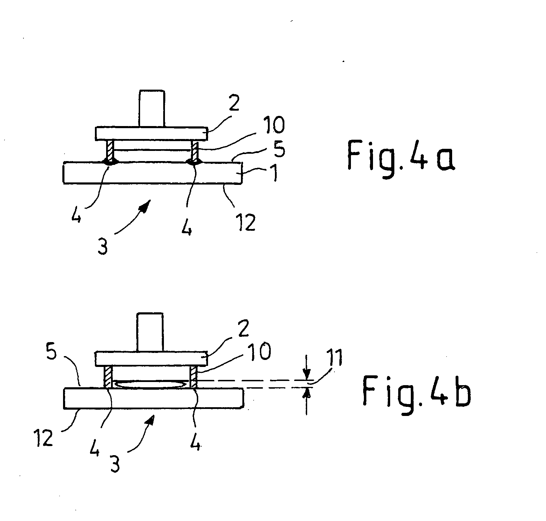

Bevorzugt erfolgt die Verbindung, bzw. das Verschweißen durch das torsionale Ultraschallschweißverfahren. Es können jedoch die zu verbindenden Teile auch mittels eines zusätzlichen Stoffes, der in die Trennebene eingebracht wird, miteinander verklebt werden. Dies zeigt Figur 4.

Figur 4a zeigt eine Ausführungsform für eine Schweißverbindung mit einer umlaufenden Abstandsrippe 10 oder Schweißrippe. Die Fügefläche 4 ist in dieser Ausführungsform nur die Oberfläche der Abstandsrippe 10, d. h. die Rippenspitze. Die Rippenkontur bzw. die Rippenspitze wird erfindungsgemäß der Bauteilkontur angepasst. Anschließend werden die Rippenspitzen auf dem Bauteil 1 verschweißt.

Die Schweißverbindung erfolgt so nur in einer Ebene, nämlich die durch die Rippenspitzen aufgeschlagene Ebene. Die Länge der Abstandsrippen 10 oder Schweißrippen spielt keine Rolle. Die Abstandsrippen 10 können auch umlaufend ausgebildet werden, es genügen jedoch auch einzelne Abstandsrippen 10.

Figur 4b zeigt eine Ausführungsform für das Kleben. Die Fügefläche 4 ist in dieser Ausführungsform die Oberfläche der Abstandsrippe 10, d.h. die Rippenspitze. Die Abstandsrippen 10 müssen nicht umlaufend sein, manchmal reichen hier einzelne Punkte.

Neben der Ebene der Rippenspitzen muss auch die zweite Ebene zwischen der Rippenkontur und der Bauteilkontur angepasst werden. Hier kommt der Kleber rein.

Beim Kleben ist die Fugenbreite 11 entscheidend. Hier ist wichtig, dass die beiden Flächen immer den gleichen Abstand zueinander haben.

## Patentansprüche

1. Verfahren zum Fügen von mindestens zwei Anbauteilen (2) mit einem einzigen Bauteil (1) an verschiedenen Fügeorten (3) des Bauteils (1), insbesondere für ein Kraftfahrzeug, wobei jedes der Anbauteile (2) eine Fügefläche (4) aufweist, die an die Oberfläche (5) des Bauteils (1) am Fügeort (3) angepasst wird, wobei sich die Anbauteile (2) ausschließlich durch verschiedenartige Fügeflächen (4) voneinander unterscheiden und ansonsten identisch ausgebildet werden, **dadurch gekennzeichnet,**
a) **dass** ein für alle Anbauteile (2) verwendbarer Grundkörper (6) hergestellt wird und alle Grundkörper (6) eine Bearbeitungsfläche (7) aufweisen, die durch Konturanpassung in die erforderlichen Fügeflächen (4) überführbar ist und
b) unmittelbar vor dem Fügen diese Konturanpassung der Bearbeitungsfläche (7) an den Grundkörpern (6) vorgenommen wird und dadurch die zu verbindenden Anbauteile (2) mit den erforderlichen Fügeflächen geschaffen werden und
c) unmittelbar anschließend die Anbauteile (2) mit ihren Fügeflächen (4) auf die Fügeorte (3) des Bauteils (1) aufgesetzt und gefügt werden.

2. Verfahren nach Anspruch 1, **dadurch gekennzeichnet, dass** das Anbauteil (2) als ein Verbindungsteil ausgebildet wird an dem andere Teile befestigbar sind.

3. Verfahren nach Anspruch 1 oder 2, **dadurch gekennzeichnet, dass** die Grundkörper (6) von einem Roboter (8) gegriffen und einer Bearbeitungsstation (9) zugeführt wird, in der Bearbeitungsstation (9) die Bearbeitungsfläche (7) durch Konturanpassung in die erforderlichen Fügefläche (4) überführt wird und anschließend der Roboter (8) die dann fertigen Anbauteile (2) der Bearbeitungsstation (9) entnimmt und mit ihren Fügeflächen (4) auf die Fügeorte (3) der Bauteile (1) aufsetzt und anschließend die Teile (1, 2) gefügt werden.

4. Verfahren nach einem der Ansprüche 1 bis 3, **dadurch gekennzeichnet, dass** die Konturanpassung der Bearbeitungsflächen (7) durch Umformung oder Materialabtrag erfolgt.

5. Verfahren nach einem der Ansprüche 1 bis 4, **dadurch gekennzeichnet, dass** das Fügen durch Schweißen oder Kleben durchgeführt wird.

6. Verfahren nach Anspruch 5, **dadurch gekennzeichnet, dass** zum Schweißen das torsionale Ultraschallschweißen verwendet wird.

7. Verfahren nach Anspruch 6, **dadurch gekennzeichnet, dass** sich beim torsionalen Ultraschallschweißen die Konturanpassung nur auf Teile der Bearbeitungsfläche (7) erstreckt, zum Beispiel auf die zum Bauteil (1) gewandte Oberfläche einer Abstandsrippe (10).

8. Verfahren nach Anspruch 5, **dadurch gekennzeichnet, dass** bei der Konturanpassung vor dem Kleben die Fügeflächen (4) mit Abstandsrippen (10) versehen werden, deren zum Bauteil (1) gewandte Oberflächen mit der Oberfläche (5) des Bauteils (1) am Fügeort (3) verklebt werden.

9. Verfahren nach Anspruch 5, **dadurch gekennzeichnet, dass** bei der Konturanpassung vor dem Kleben die Fügeflächen (4) so mit Abstandsrippen (10) versehen werden, dass eine für das verwendete Klebesystem benötigte Fugenbreite (11) geschaffen ist.

10. Verwendung des Verfahrens nach einem der Ansprüche 1 bis 9 für Bauteile (1) und Anbauteile (2) aus Kunststoff im Automotivbereich.

11. Verwendung nach Anspruch 10 bei Bauteilen (1) und Anbauteilen (2) des Exterieurs bevorzugt im Bereich unterhalb lackierter Außenflächen (12).

12. Verwendung nach Anspruch 10 oder 11 für Stoßfänger als Bauteile (1).

13. Verwendung nach einem der Ansprüche 10 bis 12 für Sensorhalter als Anbauteile (2).

## Claims

1. Method for joining at least two attachments (2) to a single component (1) at various joining locations (3) of the component (1), in particular for a motor vehicle. wherein each of the attachments (2) has a joining surface (4), which is adapted to the surface (5) of the component (1) at the joining location (3), wherein the attachments (2) only differ from one another through different joining surfaces (4) and are otherwise identical, **characterised in that**
a) a basic body (6) suitable for all attachments (2) is produced, wherein all the basic bodies (6) have a working surface (7) that can be worked into the required joining surface (4) by contour matching, and
b) immediately prior to joining, this contour matching of the working surface (7) is performed on the basic bodies (6), wherein the attachments (2) to be joined are provided with the necessary joining surfaces, and
c) immediately following, the attachments (2) with their joining surfaces (4) are positioned at the joining locations (3) of the component (1) and joined together.

2. Method according to claim 1, **characterised in that** the attachment (2) is formed as a joining part that can be attached to the other parts.

3. Method according to claim 1 or 2, **characterised in that** the basic body (6) is gripped by a robot (8) and fed to a processing station (9), wherein the working surface (7) is converted into the required joining surface (4) through contour matching in the processing station (9), and then the robot (8) extracts the finished attachment (2) from the processing station (9) and positions it with its joining surface (4) at the joining location (3) of the component (1) and then the parts (1, 2) are joined.

4. Method according to any one of claims 1 to 3, **characterised in that** the contour matching of the working surfaces (7) is effected by material removal or reshaping.

5. Method according to any one of claims 1 to 4, **characterised in that** the joining is performed by welding or bonding.

6. Method according to claim 5, **characterised in that** torsional ultrasonic welding is used for the welding.

7. Method according to claim 6, **characterised in that** in the torsional ultrasonic welding, the contour matching is only applied to parts of the working surface (7), for example, to the surface of a spacer rib (10) facing the component (1).

8. Method according to claim 5, **characterised in that** the joining surfaces (4) are provided with spacer ribs (10) in the contour matching before bonding, wherein the surface facing the component (1) is bonded with the surface (5) of the component (1) at the joining location (3).

9. Method according to claim 5, **characterised in that** the joining surfaces (4) are provided with spacer ribs (10) for contour matching before bonding, in order to provide the gap width (11) required for the adhesive system used.

10. Use of the method according to one of the claims 1 to 9 for components (1) and attachments (2) made of plastic in the automotive sector.

11. Use according to claim 10 for components (1) and attachments (2) for exterior use, preferably in the area below painted exterior surfaces (12).

12. Use according to claim 10 or 11 as components for the bumper (1).

13. Use according to one of claims 10 to 12 for attachments (2) in the form of a sensor holder.

## Revendications

1. Procédé de jonction d'au moins deux pièces rapportées (2) avec un seul composant (1) à différents endroits de jonction (3) du composant (1), plus particulièrement pour un véhicule à moteur, chacune des pièces rapportées (2) comprenant une surface de jonction (4) qui est adaptée à la surface (5) du composant (1), les pièces rapportées (2) étant constituées exclusivement de surfaces de jonction (4) différentes entre elles et sinon identiques, **caractérisé en ce que**
a) un corps de base (6) est fabriqué pour toutes les pièces rapportées (2) et tous les corps de base (6) comprennent une surface d'usinage (7) qui peut être transformée, par adaptation du contour, dans les surfaces de jonctions (4) et
b) immédiatement avant la jonction, cette adaptation de contour de la surface d'usinage (7) est effectuée sur le corps de base (6) et les pièces rapportées (2) à relier avec les surfaces de jonction nécessaires sont ainsi réalisées et
c) immédiatement ensuite, les pièces rapportées (2) avec leurs surfaces de jonction (4) sont posées et jointes au niveau des endroits de jonction (3) du composant (1).

2. Procédé selon la revendication 1, **caractérisé en ce que** la pièce rapportée (2) est conçue comme une pièce de liaison sur laquelle d'autres pièces peuvent être fixées.

3. Procédé selon la revendication 1 ou 2, **caractérisé en ce que** les corps de base (6) sont saisis par un robot (8) et amenés vers une station d'usinage (9), et dans cette station d'usinage (9), la surface d'usinage (7) est transformée, par adaptation du contour, dans la surface de jonction (4) nécessaire puis le robot (8) retire les pièces rapportées (2) finies de la station d'usinage (9) et les pose, avec leurs surfaces de jonction (4) sur les endroits de jonction (3) des composants (1) puis les pièces (1, 2) sont jointes.

4. Procédé selon l'une des revendications 1 à 3, **caractérisé en ce que** l'adaptation du contour des surfaces d'usinage (7) a lieu par formage ou enlèvement de matière.

5. Procédé selon l'une des revendications 1 à 4, **caractérisé en ce que** la jonction est effectuée par soudure ou collage.

6. Procédé selon la revendication 5, **caractérisé en ce que**, pour la soudure, une soudure par ultrasons à torsion est utilisée.

7. Procédé selon la revendication 6, **caractérisé en ce que**, lors de la soudure par ultrasons à torsion, l'adaptation du contour s'étend uniquement sur des parties de la surface d'usinage (7), par exemple sur la surface d'une nervure d'écartement (10) orientée vers le composant (1).

8. Procédé selon la revendication 5, **caractérisé en ce que**, lors de l'adaptation du contour, avant le collage, les surfaces de jonction (4) sont munies de nervures d'écartement (10), dont les surfaces orientées vers le composant (1) sont collées avec la surface (5) du composant (1) à l'endroit de jonction (3).

9. Procédé selon la revendication 5, **caractérisé en ce que**, lors de l'adaptation du contour, avant le collage, les surfaces de jonction (4) sont munies de nervures d'écartement (10), de façon à ce qu'une largeur de jonction (11) nécessaire pour le système de collage utilisé soit réalisée.

10. Utilisation du procédé selon l'une des revendications 1 à 9 pour des composants (1) et des pièces rapportées (2) en matière plastique dans le secteur automobile.

11. Utilisation selon la revendication 10 pour des composants (1) et des pièces rapportées (2) de l'extérieur, de préférence dans une zone en dessous de surfaces externes peintes (12).

12. Utilisation selon la revendication 10 ou 11 pour des pare-chocs en tant que composants (1).

13. Utilisation selon l'une des revendications 10 à 12 pour des supports de capteurs en tant que pièces rapportées (2).
